(19) **Europäisches Patentamt**

**European Patent Office**

**Office européen des brevets**

(11) **EP 1 457 019 B1**

(12) **FASCICULE DE BREVET EUROPEEN**

(45) Date de publication et mention
de la délivrance du brevet:
**01.03.2006 Bulletin 2006/09**

(51) Int Cl.:
***H04L 29/06*** *(2006.01)*    ***H04N 7/16*** *(2006.01)*

(21) Numéro de dépôt: **02793228.4**

(22) Date de dépôt: **12.11.2002**

(86) Numéro de dépôt international:
**PCT/FR2002/003858**

(87) Numéro de publication internationale:
**WO 2003/051013 (19.06.2003 Gazette 2003/25)**

(54) **Procédé et dispositifs de diffusion d'une succession de contenus**

Verfahren und Vorrichtungen zur Rundsendung von Sukzessivem Inhalt

Method and devices for broadcasting successive content

(84) Etats contractants désignés:
**AT BE BG CH CY CZ DE DK EE ES FI FR GB GR
IE IT LI LU MC NL PT SE SK TR**

(30) Priorité: **13.12.2001  FR 0116180**

(43) Date de publication de la demande:
**15.09.2004  Bulletin 2004/38**

(73) Titulaire: **FRANCE TELECOM
75015 Paris (FR)**

(72) Inventeur: **BERTIN, Christian
F-35000 Rennes (FR)**

(56) Documents cités:
**FR-A- 2 796 790**

- **SARGINSON P A: "MPEG-2: A TUTORIAL
INTRODUCTION TO THE SYSTEMS LAYER" IEE
COLLOQUIUM ON MPEG WHAT IT IS AND WHAT
IT ISN'T, IEE, LONDON, GB, 1995, pages 4-1-4-13,
XP000560804**
- **HANDLEY M ET AL: "SDP: Session Description
Protocol" IETF, avril 1998 (1998-04),
XP002101463**

**Description**

L'invention concerne un procédé de diffusion d'une succession de contenus à partir d'une source de diffusion vers une pluralité de terminaux récepteurs, à travers un réseau informatique notamment l'Internet, une source de diffusion et un terminal récepteur pour la mise en oeuvre du procédé.

Certaines chaînes de télévision diffusent en temps réel sur l'Internet, à partir d'une source de diffusion S, une succession de contenus tels que des émissions de télévision, des films vidéo et autres programmes. Le mode de diffusion le plus souvent utilisé est le mode dit "multicast" permettant à la source S de diffuser chaque contenu vers une pluralité de terminaux récepteurs en un seul envoi. La source S émet des unités de données, en l'espèce des paquets de données IP ou "datagrammes IP", véhiculant le contenu à diffuser. Ces paquets sont dupliqués en cascade par des routeurs situés à des noeuds du réseau afin d'être acheminés jusqu'aux différents terminaux récepteurs. Pour recevoir un contenu, chaque terminal récupère au préalable un fichier SDP (Session Description Protocol) associé à la source S, par exemple par téléchargement depuis un portail d'accès à travers l'Internet. La structure du fichier SDP, définie par l'IETF (Internet Engineering Task Force) est décrite dans le document RFC2327. Ce fichier véhicule les informations requises pour permettre aux terminaux récepteurs de recevoir les contenus diffusés par la source S. Un fichier SDP principal contient toutes les informations requises pour se mettre en réception de cette source S, quel que soit le contenu diffusé par celle-ci. D'autres fichiers SDP, spécifiques aux contenus (émission TV, film, conférence, etc.) diffusés par la source S, contiennent les seules informations nécessaires pour recevoir ces contenus particuliers. Pour recevoir un contenu diffusé par la source S, un terminal envoie une requête d'acquisition de ce contenu vers la source, à travers l'Internet, en utilisant le protocole IGMP (Internet Group Management Protocol). Le premier routeur Internet qui reçoit cette requête, alors qu'il reçoit déjà des paquets de données IP émis par la source S, se charge de dupliquer ces paquets de données IP puis les achemine vers le terminal ou vers un autre routeur plus proche du terminal.

Les différents contenus successivement diffusés par la source S présentent des caractéristiques de configuration (résolution, fréquence, format 4/3 ou 16/9, codage, par ex. M-PEG4, M-PEG2, audio en différentes langues, embrouillage ou autres paramètres) pouvant varier d'un contenu à l'autre. Pour prendre en compte de tels changements, les terminaux récepteurs doivent être capables de repérer les transitions entre les contenus successifs. A cet effet, il est connu, notamment dans le domaine de la diffusion de chaînes de télévision en MPEG-2 par satellite ou par câble, de communiquer aux terminaux récepteurs une indication temporelle sur l'instant auquel la transition est prévue. Toutefois, cette solution n'est pas totalement satisfaisante pour les raisons suivantes: d'une part, l'indication temporelle sur l'instant de la transition manque le plus souvent de précision et, d'autre part, cette solution nécessite de connaître à l'avance, et avec précision, l'instant de la transition, ce qui s'avère extrêmement difficile, voire impossible, dans certaines circonstances. A titre d'exemple de telles circonstances, on peut citer le cas d'une interruption imprévue des programmes pour la diffusion d'un journal télévisé exceptionnel ou encore le cas de la retransmission en direct d'un match de tennis dont la durée n'est pas connue à l'avance.

Pour permettre aux terminaux récepteurs de déterminer l'instant d'une transition entre deux contenus successifs de façon plus précise, le document FR2796790 propose un procédé de diffusion selon la norme MPEG-2, à travers un réseau informatique, d'une succession de contenus décomposés en unités de données, à partir d'une source de diffusion vers une pluralité de terminaux récepteurs aptes à se mettre en réception de la source, comprenant les étapes consistant

- à marquer les unités de données à diffuser, en modifiant le marquage des unités de données des contenus successifs séparés par une seule transition;
- pour chaque contenu, à émettre des unités de données véhiculant ledit contenu depuis la source, à travers le réseau informatique, et
- à fournir aux terminaux récepteurs des informations de marquage leur permettant de distinguer les unités de données appartenant à des contenus successifs, à l'aide de leur marquage, et de repérer ainsi chaque transition entre deux contenus successifs

Ce procédé ne permet pas aux terminaux récepteurs d'être informés à l'avance d'une transition prévue entre deux contenus successifs.

La présente invention propose de pallier cet inconvénient.

Le problème technique de l'invention est résolu par le fait qu'on transmet les informations de marquage relatives à un contenu pendant la diffusion de l'un au moins des contenus précédents.

La connaissance des informations de marquage d'un contenu qui va suivre, préalablement à la transition, permet aux terminaux récepteurs de repérer en temps réel, et avec toute la précision souhaitée, les transitions entre contenus successifs.

Généralement, les informations de marquage relatives à un contenu $C_{n+1}$ sont transmises aux terminaux récepteurs, pour une première fois, pendant la diffusion du contenu précédent $C_n$, à moins que la durée de celui-ci soit insuffisante. Dans ce cas, les informations de marquage relatives à $C_{n+1}$ sont transmises pour la première fois lors de la diffusion d'un contenu encore antérieur à $C_n$, pour prévenir les terminaux récepteurs suffisamment tôt avant l'instant présumé de la transition. Il n'est toutefois pas nécessaire de connaître précisément l'instant de cette transition, mais seulement une plage horaire durant laquelle la transition est prévue.

En outre, pour prendre en compte les changements entre deux contenus successifs séparés par une transition, les terminaux n'ont pas besoin de connaître précisément l'instant de cette transition. Il leur suffit de connaître les informations de marquage leur permettant de distinguer les unités de données appartenant aux deux contenus en fonction de leur marquage, autrement dit d'identifier le contenu auquel appartient chaque unité de données par le marquage de celle-ci.

Avantageusement, on diffuse les unités de données d'un contenu à travers au moins un canal de diffusion et on transmet les informations de marquage relatives audit contenu à travers un canal de signalisation, distinct du canal de diffusion. Les contenus successifs et les informations de marquage relatives à ces contenus sont ainsi diffusés à travers deux canaux distincts, indépendamment les uns des autres.

Dans ce cas et de préférence, on insère les informations de marquage relatives à un contenu donné dans des données d'exploitation relatives audit contenu.

Les données d'exploitation relatives à un contenu sont diffusées à travers le canal de signalisation et contiennent les caractéristiques de configuration du contenu, lesquelles permettent d'exploiter le contenu.

Dans un mode de réalisation particulier de l'invention, on évalue la durée de diffusion restante avant ladite transition et on transmet les informations de marquage relatives au contenu suivant ladite transition lorsque la durée de diffusion restante est inférieure à un seuil de temps prédéfini. On détermine de façon approximative la durée restante avant la transition et, lorsque cette durée restante passe en dessous du seuil, on transmet les informations de marquage.

Dans un autre mode de réalisation, on transmet régulièrement les informations de marquage relatives au contenu suivant ladite transition durant toute la diffusion du contenu précédant ladite transition. Ainsi, il n'est plus nécessaire de surveiller la durée restante de diffusion du contenu en cours.

Selon un second aspect, l'invention concerne un ensemble de deux signaux diffusés comprenant

- un premier signal comprenant une succession de contenus décomposés en unités de données, les unités de données appartenant à des contenus successifs contenant des marquages respectifs différents,
- un second signal comprenant des informations de marquage permettant à un terminal récepteur de distinguer les unités de données appartenant à des contenus successifs, à l'aide de leur marquage, et de repérer ainsi chaque transition entre deux contenus successifs,
  les deux signaux étant coordonnés de telle sorte que les informations de marquage relatives à un contenu soient diffusées pendant la diffusion de l'un au moins des contenus précédents.

Selon un troisième aspect, l'invention concerne une source de diffusion comprenant

- des premiers moyens d'émission agencés pour diffuser un premier signal comprenant une succession de contenus décomposés en unités de données, les unités de données appartenant à des contenus successifs contenant des marquages respectifs différents, et
- des seconds moyens d'émission agencés pour diffuser un second signal comprenant des informations de marquage permettant à un terminal récepteur de distinguer les unités de données appartenant à des contenus successifs, à l'aide de leur marquage, et de repérer ainsi chaque transition entre deux contenus successifs,

les premiers et les seconds moyens d'émission étant agencés pour diffuser le premier et le second signal de façon coordonnée de telle sorte que les informations de marquage relatives à un contenu soient diffusées pendant la diffusion de l'un au moins des contenus précédents.

Selon un quatrième aspect, l'invention concerne un terminal récepteur comprenant

- des premiers moyens de réception d'un premier signal comprenant une succession de contenus décomposés en unités de données, les unités de données appartenant à des contenus successifs contenant des marquages respectifs différents,
- des seconds moyens de réception d'un second signal comprenant des informations de marquage relatives aux contenus successivement reçus,
- des moyens mémoires agencés pour, pendant la réception d'un contenu donné par les premiers moyens de réception, mémoriser les informations de marquage reçues par les seconds moyens de réception et relatives à un contenu suivant,

le terminal étant agencé pour détecter la transition entre ledit contenu et ledit contenu suivant à l'aide des informations de marquage préalablement mémorisées.

L'invention sera mieux comprise à l'aide de la description suivante d'un mode de réalisation particulier du procédé de diffusion de l'invention et de formes de réalisation particulières du serveur de diffusion et du terminal de l'invention, en référence au dessin annexé sur lequel:

- la figure 1 représente une vue schématique d'une source de diffusion, avec des canaux de diffusion et un canal de signalisation, un portail, un terminal récepteur ct l'Internet;
- la figure 2 représente un schéma bloc fonctionnel de la source de diffusion de la figure 1;
- la figure 3 représente un schéma bloc fonctionnel du terminal récepteur de la figure 1;

- les figures 4a et 4b représentent des unités de données et des blocs de données d'exploitation, diffusés par la source de la figure 1 selon deux différents modes de diffusion;
- les figure 5a et 5b représentent deux paquets de données marqués au niveau de la couche SL et au niveau de la couche Flexmux respectivement;

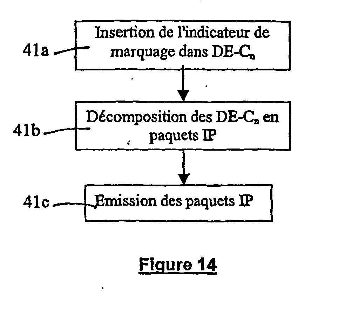

- les figures 6 à 14 représentent des organigrammes des étapes du procédé de diffusion de l'invention, selon le mode de réalisation particulier décrit.

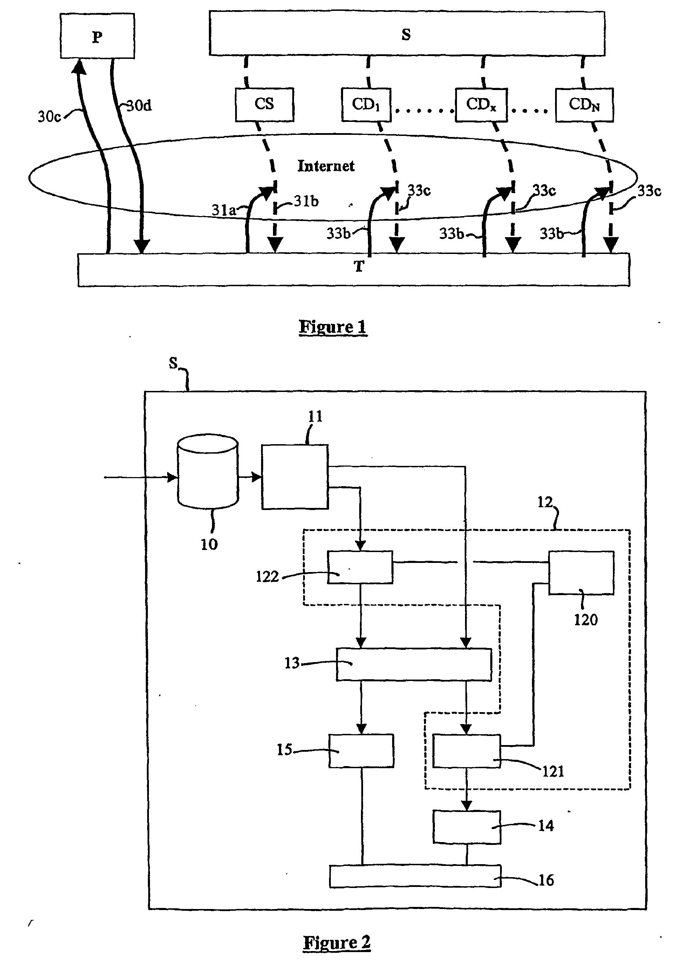

Sur la figure 1, on a représenté une source de diffusion "S", un terminal récepteur "T", un portail TV "P" et un réseau informatique, en l'espèce l'Internet.

Dans l'exemple particulier de la description, la source S est une chaîne de télévision, que l'on appellera par la suite "chaîne A", hébergée par un serveur audiovisuel de l'Internet et diffusant en mode multicast une succession de contenus (émission télévisée, films vidéos, publicités, etc.), à travers l'Internet, vers des terminaux récepteurs T. En référence à la figure 2, la source S comprend une base de données 10, un module 11 de commande de la diffusion, un module de marquage 12, un module de décomposition 13, deux modules d'émission 14 et 15 et une interface 16 de connexion à l'Internet.

La base de données 10, alimentée par un centre de programmation non représenté, contient les contenus $C_n$ à diffuser et, pour chaque contenu $C_n$, des données d'exploitation associées DE. Par définition, les données d'exploitation DE relatives à un contenu $C_n$ sont des données permettant à un terminal récepteur T d'exploiter, de lire ce contenu. En l'espèce, les données d'exploitation DE relatives au contenu $C_n$ contiennent

    i) les informations utiles pour se mettre en réception d'un ou de plusieurs canaux de diffusion $CD_x$ à travers lesquels le contenu $C_n$ est diffusé, à savoir l'adresse Internet multicast de chacun des canaux de diffusion $CD_x$, le mode de transmission utilisé (couche de synchronisation, multiplexage) et les différents flux de données diffusés (audio, vidéo, etc.) avec les numéros des porte d'émission de ces flux, et ii) des caractéristiques de configuration du contenu $C_n$, nécessaires pour permettre aux terminaux récepteurs de décoder correctement le contenu $C_n$, à savoir des caractéristiques de résolution, de fréquence, de format, de codage, de langues et d'embrouillage.

Le module de commande 11 commande la diffusion des contenus reçus et des données d'exploitation correspondantes à travers l'Internet.

Le module de décomposition 13, relié au module de commande 11 et aux deux modules d'émission 14, 15, est destiné à décomposer les contenus et les données d'exploitation en unités de données, en l'espèce en paquets de données IP (Internet Protocol), en vue de leur diffusion à travers l'Internet.

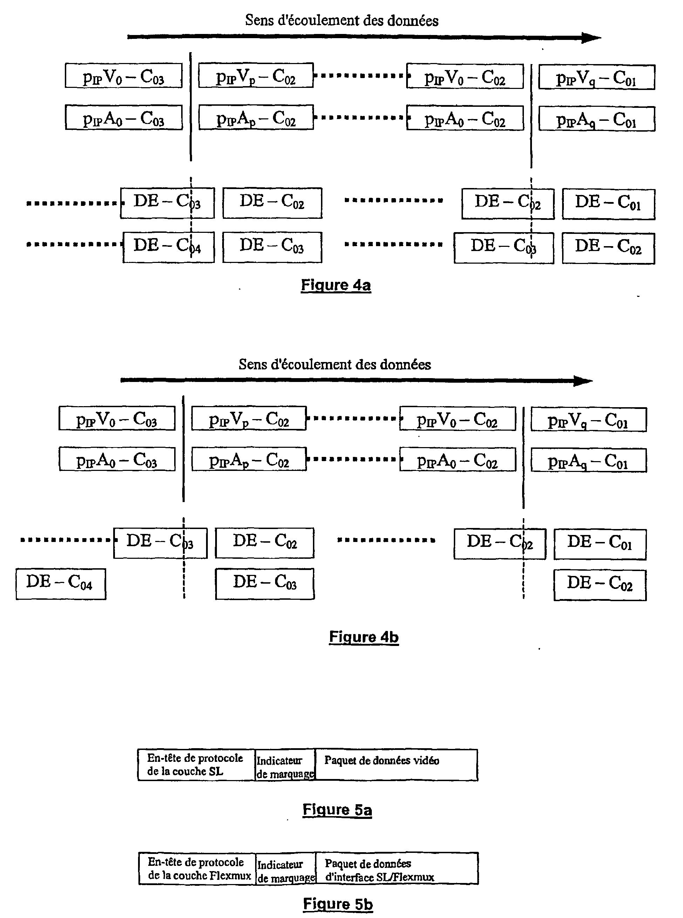

Les deux modules d'émission 14, 15 sont reliés à l'interface de connexion Internet 16. Lors de la diffusion d'un contenu, le module 14 émet un signal véhiculant le contenu, en "multiflux", à travers des canaux de diffusion $CD_x$. Parallèlement, le module 15 émet régulièrement les données d'exploitation du contenu, à travers un canal de signalisation CS. La diffusion en "multiflux" consiste à émettre, pour chaque type de données (audio, vidéo ou autre), un flux de données de base et un ou plusieurs flux de données complémentaires destinés à améliorer la qualité du signal véhiculé par le flux de base. Chaque terminal récepteur peut ainsi adapter la qualité du signal reçu à ses propres capacités, en utilisant le flux de base et éventuellement un ou plusieurs flux complémentaires. La source S décompose en paquets de données IP chaque flux et émet ces paquets IP à travers l'Internet, par un canal de diffusion $CD_x$. Sur la figure 4b, on a représenté partiellement les flux vidéo de base et audio de base, décomposés en paquets de données IP vidéo "$P_{IP}V_x$" et en paquets de données IP audio "$P_{IP}A_x$" respectivement, de trois contenus "$C_{01}$", "$C_{02}$", "$C_{03}$" successivement diffusés par la source S. La flèche indique le sens d'écoulement des données. Ainsi, les données situées à droite sur la figure sont émises par la source S avant les données situées à gauche. Parallèlement, comme on peut également le voir sur la figure 4, pendant la diffusion de chaque contenu, la source S émet régulièrement les données d'exploitation DE de ce contenu. En outre, avant chaque transition entre deux contenus successifs, la source S émet au moins une fois les données d'exploitation du contenu suivant la transition par le canal de signalisation CS.

Le module de marquage 12 comprend un bloc 120 de commande du marquage et deux blocs d'insertion 121, 122. Le bloc d'insertion 121 est interposé entre le module de décomposition 13 et le module d'émission 14 et le bloc d'insertion 122 est interposé entre le module de commande 11 et le module de décomposition 13. Le bloc de commande 120 attribue à chaque contenu à diffuser un indicateur de marquage et commande le fonctionnement des deux blocs d'insertion 121, 122. Dans l'exemple particulier de la description, on utilise un modulo 256 pour l'attribution des indicateurs de marquage. En d'autres termes, les indicateurs de marquage respectivement attribués aux contenus successifs sont des nombres séquentiels d'un groupe de nombres compris entre 0 et 255, l'indicateur de marquage d'un contenu étant égal à l'indicateur de marquage du contenu précédent incrémenté de un, sauf si ce dernier est égal à 255, auquel cas l'indicateur de marquage du contenu suivant est égal à 0. Le fait d'attribuer aux contenus successifs des indicateurs de marquage appartenant à un groupe de taille limitée, de façon séquentielle et cyclique, permet de séparer les contenus portant le même indicateur de marquage par un intervalle de temps suffisamment long pour éviter toute confusion entre ces contenus par les terminaux récepteurs T, et ce sans qu'il soit nécessaire d'utiliser un nombre excessif d'indicateurs de marquage différents. Lors de la diffusion d'un contenu $C_n$, le bloc d'insertion 121 marque tous les paquets de données IP de ce contenu $C_n$ en y insérant l'indicateur de marquage attribué à ce contenu $C_n$, dans un en-tête d'une couche de protocole, en l'espèce la couche SL (Synchronisation Layer). La couche SL est une couche applicative. Sur la figure 5a on a représenté un paquet de données vidéo au niveau de la couche SL, comprenant l'en-tête de la couche SL, le numéro attribué au contenu considéré, c'est-à-dire l'indicateur de marquage, et des données vidéo de ce contenu. On pourrait également insérer l'indicateur de marquage au niveau de la couche flexmux, située en-dessous de la couche SL, comme représenté sur la figure 5b. Les couches SL et Flexmux sont définies dans la norme ISO/IEC 14496-1 Systems "section 10.2 Sync Layer" et "section 12.2 Flexmux tool". L'indicateur de marquage permet aux terminaux récepteurs T d'identifier le contenu $C_n$ auquel le paquet de données IP appartient. D'une manière générale, le rôle des indicateurs de marquage est de permettre aux terminaux récepteurs T de distinguer les paquets de données IP appartenant à différents contenus, en fonction de leur appartenance à un contenu, et de repérer ainsi les transitions entre contenus successifs. Parallèlement, le bloc d'insertion 122 insère dans les données d'exploitation relatives au contenu $C_n$ l'indicateur de marquage attribué à ce contenu $C_n$, comme cela sera explicité plus loin dans la description du procédé.

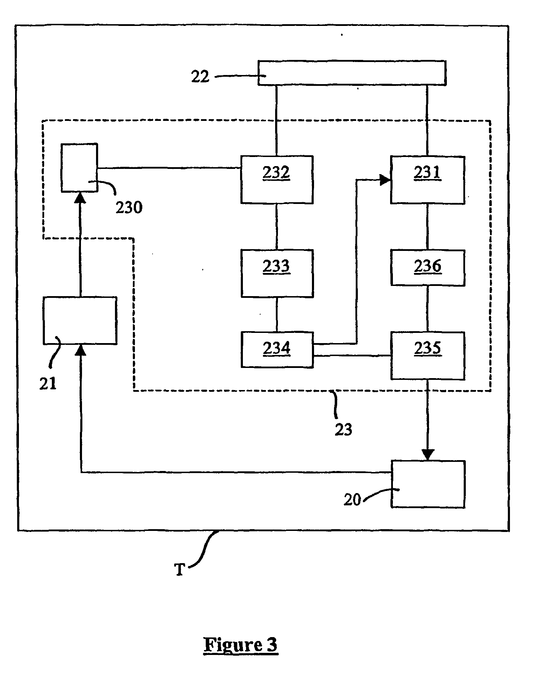

En référence à la figure 3, le terminal T comprend une interface homme-machine 20, comportant des moyens de saisie (ici un clavier et un organe de sélection et de déplacement d'un curseur à l'écran), un écran de visualisation et un haut-parleur, un navigateur Internet 21, un module 22 de connexion à l'Internet, un module d'exploitation 23 et une unité centrale de commande non représentée.

Le module d'exploitation 23 permet au terminal T de recevoir et d'exploiter, de lire les contenus diffusés à travers l'Internet par des sources de diffusion, et notamment par la source S. Il comprend une mémoire 230 de stockage d'au moins un fichier descriptif SDP relatif à une source de diffusion, un bloc 231 de réception de canaux de diffusion $CD_x$ de la source, un bloc 232 de réception d'un canal de signalisation CS de la source, un bloc 233 d'enregistrement de données d'exploitation dans une mémoire 234 et un bloc de décodage 235. Les deux blocs de réception 231 et 232 sont reliés au module de connexion Internet 22. Le bloc de décodage 235 est relié à la mémoire 234, au bloc de réception 231 et au module d'interface homme-machine 20.

Le bloc de réception 232, relié à la mémoire 230, est destiné à se mettre en réception du canal de signalisation CS, à l'aide des informations contenues dans le fichier SDP stocké dans la mémoire 230, et à recevoir les données d'exploitation de contenu diffusées à travers ce canal de signalisation CS. Le bloc d'enregistrement 233, interposé entre le bloc de réception 232 et la mémoire 234, est destiné à enregistrer les données d'exploitation de contenu, reçues par le bloc 232 à travers le canal de signalisation CS, dans la mémoire 234. La mémoire 234 contient ainsi, pour chaque contenu $C_n$ diffusé par la source S, les informations utiles pour recevoir le contenu $C_n$, les caractéristiques de configuration du contenu $C_n$ ainsi que l'indicateur de marquage associé, attribué au contenu $C_n$ par la source S. Le bloc de réception 231, relié à la mémoire 234, est destiné à se mettre en réception des canaux de diffusion $CD_x$, à l'aide des données d'exploitation de contenu enregistrées dans la mémoire 234, et à recevoir les contenus diffusés à travers ces canaux de diffusion $CD_x$.

Le module d'exploitation 23 comprend en outre un bloc de détection 236, interposé entre le bloc de réception 231 et le bloc de décodage 235. Le bloc de détection 236 est destiné, pour chaque paquet de donnée IP reçu par un canal de diffusion $CD_x$, à détecter l'indicateur de marquage inséré dans ce paquet IP et à le fournir au bloc de décodage 235. Lors de la réception d'un contenu par les canaux de diffusion $CD_x$, le bloc de détection 236 détecte l'indicateur de marquage inséré dans les paquets IP reçus véhiculant ce contenu et le fournit au bloc de décodage 235. Celui-ci recherche dans la mémoire 234 les données d'exploitation associées à cet indicateur de marquage, lesquelles sont celles du contenu reçu, en extrait les caractéristiques de configuration et, à l'aide de ces caractéristiques, décode les paquets Ip reçus en vue de la diffusion locale du contenu au moyen de l'interface homme-machine 20.

Le portail TV "P" est un site WEB d'accès à la télévision sur l'Internet qui propose un guide des programmes des chaînes de télévision et des liens hypertextes vers ces chaînes. Le portail P contient notamment les programmes de la chaîne A.

Le procédé de diffusion à travers l'Internet d'une succession de contenus, à partir de la source de diffusion S, vers une pluralité de terminaux récepteurs T va maintenant être décrit.

En référence à la figure 4, la source S diffuse en multicast et en multiflux un signal véhiculant une succession de contenus décomposés en paquets de données IP marqués, à travers les canaux de diffusion $CD_x$, et, parallèlement, envoie régulièrement les données d'exploitation du contenu en cours de diffusion, à travers le canal de signalisation CS. La source S attribue aux contenus successifs des indicateurs de marquage séquentiels, afin de modifier le marquage des paquets de données IP des contenus successifs, séparés par une seule transition. En conséquence, les paquets IP relatifs à deux contenus successifs, séparés par une seule transition, contiennent des indicateurs de marquage respectifs différents.

Les figures 10 à 13 illustrent le fonctionnement de la source S lors de la diffusion de deux contenus successifs $C_n$ et $C_{n+1}$. Dans une étape 40, la source S diffuse le contenu $C_n$ à travers les canaux de diffusion $CD_x$. Pour cela, dans une étape 40a, la source S décompose le contenu $C_n$ en paquets IP, insère l'indicateur de marqua-

ge attribué au contenu $C_n$ dans l'en-tête du paquet IP au niveau de la couche de protocole SL dans une étape 40b puis, dans une étape 40c, émet les paquets IP marqués à travers l'Internet par les canaux $CD_x$. Parallèlement à l'étape 40, la source S diffuse les données d'exploitation DE du contenu $C_n$ à travers le canal de signalisation CS, dans une étape 41. Pour cela, dans une étape 41a, la source S insère l'indicateur de marquage attribué au contenu $C_n$ dans les données d'exploitation DE du contenu $C_n$, décompose ces données d'exploitation DE en paquets IP, dans une étape 41b, puis émet les paquets IP à travers l'Internet par le canal CS, dans une étape 41c. Après avoir envoyé les données d'exploitation DE du contenu $C_n$, la source S vérifie si la transition entre le contenu $C_n$ et le contenu $C_{n+1}$ a eu lieu, dans une étape 42. L' étape 41 d'envoi des données d'exploitation DE du contenu $C_n$ est réitérée tant que la transition n'a pas eu lieu avec une période d'envoi T. Dès que la transition a eu lieu, l'étape 41 est exécutée mais pour le contenu $C_{n+1}$. En d'autres termes, après la transition, la source S envoie les données d'exploitation du contenu $C_{n+1}$.

Durant la diffusion du contenu $C_n$, parallèlement à l'étape 41, la source S surveille la durée de diffusion restante $\tau$ de ce contenu $C_n$ en la comparant régulièrement à un seuil prédéfini s (étape 44). Dès que la durée restante $\tau$ est inférieure au seuil s, la source S envoie les données d'exploitation DE du contenu suivant $C_{n+1}$ à travers le canal de signalisation CS (étape 45). Si la durée restante de diffusion du contenu $C_n$ le permet, la source S effectue plusieurs envoie des données d'exploitation DE du contenu $C_{n+1}$ avant la transition (étape 46) entre le contenu $C_n$ et le contenu suivant $C_{n+1}$.

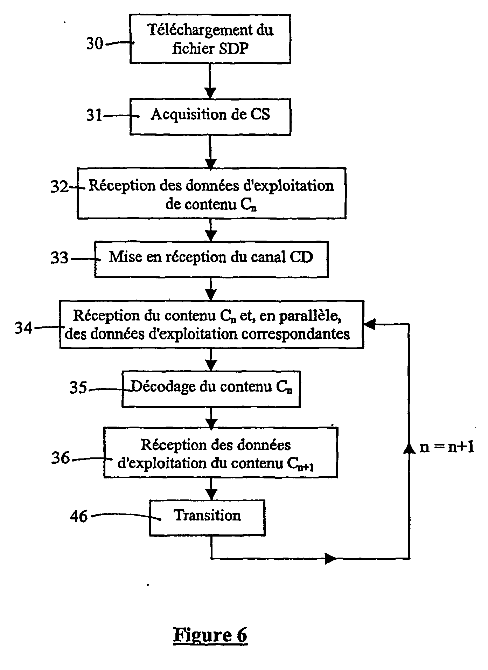

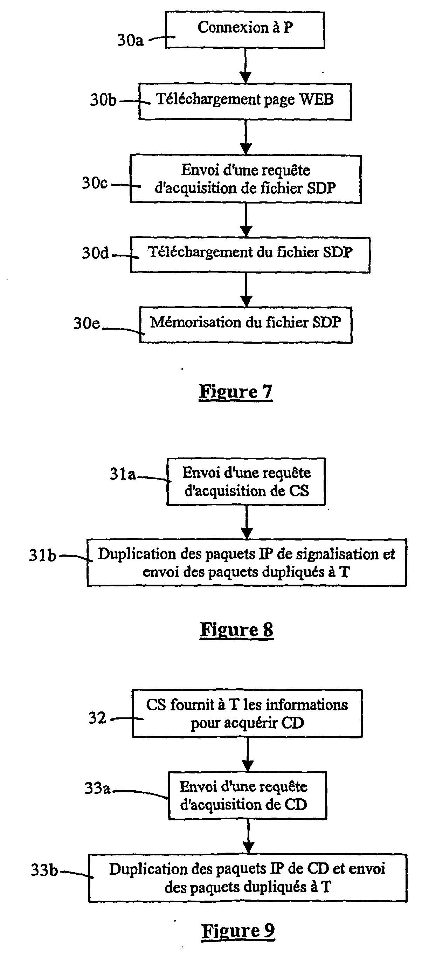

En référence à la figure 6, dans une étape 30, le terminal récepteur T récupère un fichier SDP de la source S, contenant toutes les informations nécessaires pour se mettre en réception du canal de signalisation CS de la source S, par téléchargement à travers l'Internet depuis le portail P. Pour cela, comme on peut le voir sur la figure 7, dans une étape 30a, le terminal T se connecte au portail P et, dans une étape 30b, télécharge depuis le portail P une page WEB contenant un guide des programmes d'une pluralité de chaînes, dont la chaîne A, et des liens vers ces chaînes. Dans une étape 30c, sous la commande d'un utilisateur, le terminal récepteur T active le lien vers la chaîne A en adressant ainsi au portail P une requête d'acquisition du fichier SDP de la source S. Sur réception de la requête, dans une étape 30d, le portail P transmet le fichier SDP requis au terminal T a travers l'Internet. Dans une étape 30e, le terminal T mémorise le fichier SDP de la source S dans la mémoire 230 afin d'en disposer pour se mettre en réception de la source S soit immédiatement après téléchargement, soit ultérieurement. Le fichier SDP de la source S contient toutes les informations requises pour permettre au terminal T de se mettre en réception du canal de signalisation CS de la source S.

Pour se mettre en réception des canaux de diffusion $CD_x$ de la source S, le terminal T acquiert préalablement le canal de signalisation CS dans une étape 31 (figure 6). Comme on peut le voir sur la figure 8, pour acquérir le canal de signalisation CS, dans une étape 31a, le terminal T émet une requête d'acquisition de ce canal CS à travers l'Internet, à l'aide des informations fournies par le fichier SDP récupéré et stocké dans la mémoire 230, en utilisant le protocole IGMP ("Internet Group Management Protocol"). Dans une étape 31b, le premier routeur Internet qui reçoit cette requête alors qu'il reçoit déjà des unités de données d'exploitation émises par la source S, duplique ces unités de données, lesquelles sont ensuite acheminées jusqu'au terminal T. Le terminal T se met ainsi en réception du canal de signalisation CS de la source S.

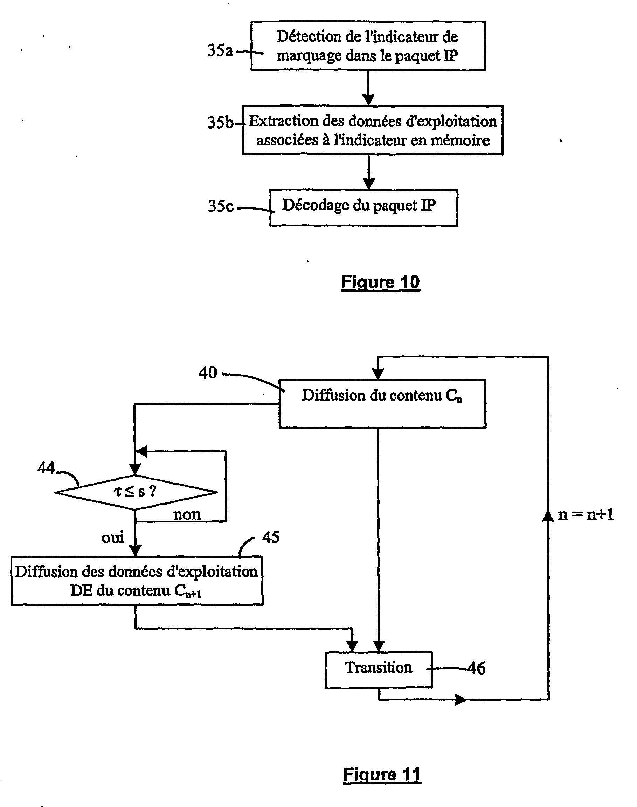

Dans une étape 32, le terminal T reçoit les données d'exploitation DE relatives au contenu $C_n$ en cours de diffusion, fournies par le canal de signalisation CS. Chaque envoi de données d'exploitation contient toutes les informations nécessaires pour se mettre en réception des canaux de diffusion $CD_x$ afin de récupérer le contenu $C_n$, les caractéristiques de configuration permettant de décoder correctement le contenu $C_n$ reçu, ainsi que l'indicateur de marquage du contenu $C_n$. Le terminal T mémorisé les données d'éxploitation DE du contenu $C_n$, avec l'indicateur de marquage correspondant, dans sa mémoire 234. A l'aide des données d'exploitation DE du contenu $C_n$, dans une étape 33, le terminal T se met en réception des canaux de diffusion $CD_x$ de la source S. Pour cela, en référence à la figure 9, dans une étape 33a, le terminal T envoie une requête d'acquisition des canaux de diffusion $CD_x$ à travers l'Internet, en utilisation le protocole IGMP. Dans une étape 33b, le premier routeur Internet, qui reçoit cette requête alors qu'il reçoit déjà les paquets IP de contenu diffusés par la source S, duplique ces paquets IP et les achemine vers le terminal T. Dans une étape 34, le terminal T reçoit les paquets de données des différents flux véhiculant le contenu $C_n$ par ces canaux de diffusion $CD_x$.

Dans une étape 35, le terminal T décode le contenu $C_n$ reçu. Pour cela, pour chaque paquet de données IP reçu, le terminal T détecte l'indicateur de marquage inséré dans le paquet (étape 35a), afin d'identifier le contenu $C_n$ auquel il appartient, extrait de la mémoire 234 les données d'exploitation DE associées à cet indicateur de marquage (étape 35b) puis, à l'aide de ces données d'exploitation DE, décode le paquet de données (étape 35c).

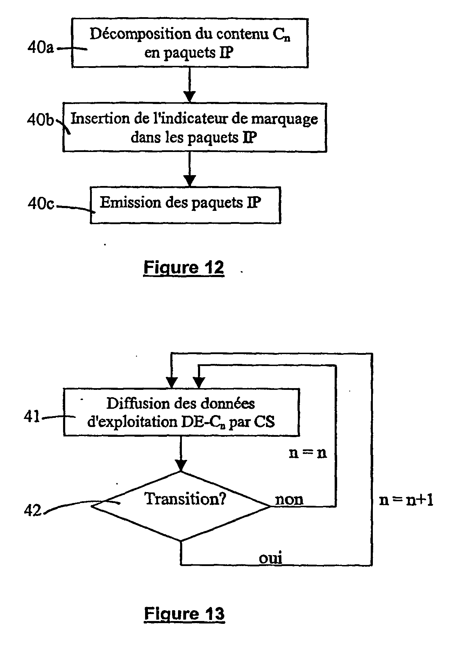

Dans une étape 36, durant la diffusion du contenu $C_n$, le terminal T reçoit par le canal de signalisation CS les données d'exploitation du contenu suivant $C_{n+1}$, envoyées par la source S à l'étape 41 (figure 13). Après la transition 46, on revient à l'étape 34, mais pour le contenu suivant $C_{n+1}$. Ainsi, le terminal T reçoit le contenu $C_{n+1}$, à travers le canal de diffusion CD, et parallèlement les données d'exploitation correspondantes, à travers le canal de signalisation CS.

La source S pourrait calculer le seuil de temps s, utilisé à l'étape 44 pour déterminer approximativement l'instant à partir duquel il convient de diffuser le bloc de données d'exploitation du contenu suivant $C_{n+1}$, à l'aide de la formule suivante:

$$s = n.T$$

dans laquelle

-   T représente la période temporelle séparant les envois successifs des données d'exploitation relatives à un même contenu et
-   n représente un entier naturel dont la valeur est telle que, compte tenu du taux de non-réception des données diffusées, au moins 99% des terminaux récepteurs reçoivent au moins une fois les données d'exploitation du contenu $C_{n+1}$ avant la fin de la diffusion du contenu $C_n$.

Généralement, la valeur de n est fixée à trois.

La source pourrait comprendre deux serveurs diffusant respectivement les données d'exploitation à travers le canal de signalisation CS et les contenus à travers les canaux de diffusion $CD_x$.

Au lieu de récupérer le fichier SDP de la source S par téléchargement depuis le portail P, le terminal récepteur pourrait le récupérer par tout autre moyen, par exemple par courrier électronique ou sur un support fixe tel qu'un CD-ROM.

Dans la description qui précède, lors de la diffusion d'un contenu $C_n$, la source S surveille la durée restante $\tau$ de diffusion du contenu $C_n$ et diffuse les données d'exploitation du contenu suivant dès que la durée restante de diffusion $\tau$ est inférieure à un seuil s. Dans un mode de réalisation simplifié de l'invention, représenté sur la figure 4a, la source S envoie régulièrement les données d'exploitation du contenu $C_n$ ainsi que celles du contenu suivant $C_{n+1}$ durant toute la diffusion du contenu $C_n$ et n'a donc pas besoin de surveiller la durée restante de diffusion du contenu $C_n$.

A la place des indicateurs séquentiels, on pourrait utiliser tout autres type de marquage, à condition que les marquages respectifs des contenus de chaque paire de contenus successifs séparés par une seule transition soient différents.

Bien entendu, l'invention pourrait s'appliquer à tout autre type de réseau informatique et notamment à tout réseau IP.

## Revendications

1.  Procédé de diffusion à travers un réseau informatique d'une succession de contenus ($C_n$, $C_{n+1}$), décomposés en unités de données, à partir d'une source de diffusion (S) vers une pluralité de terminaux récepteurs (T) aptes à se mettre en réception de la source (S), comprenant les étapes consistant

    -   à marquer (40b) les unités de données à diffuser, en modifiant le marquage des unités de données des contenus successifs séparés par une seule transition;
    -   pour chaque contenu ($C_n$, $C_{n+1}$), à émettre (40) des unités de données véhiculant ledit contenu ($C_n$, $C_{n+1}$) depuis la source (S), à travers le réseau informatique, et à fournir aux terminaux récepteurs (T) des informations de marquage leur permettant de distinguer les unités de données appartenant à des contenus successifs ($C_n$, $C_{n+1}$), à l'aide de leur marquage, et de repérer ainsi chaque transition entre deux contenus successifs ($C_n$, $C_{n+1}$),

    procédé **caractérisé par le fait qu'**on transmet (41) les informations de marquage relatives à un contenu ($C_{n+1}$) pendant la diffusion de l'un au moins des contenus précédents ($C_n$).

2.  Procédé selon la revendication 1, dans lequel on diffuse (40) les unités de données d'un contenu à travers au moins un canal de diffusion (CD) et on transmet (41) les informations de marquage relatives audit contenu à travers un canal de signalisation (CS), distinct du canal de diffusion (CD).

3.  Procédé selon l'une des revendications 1 et 2, dans lequel on insère (41a) les informations de marquage relatives à un contenu donné ($C_n$) dans des données d'exploitation (DE) relatives audit contenu ($C_n$).

4.  Procédé selon l'une des revendications 1 à 3, dans lequel on évalue (44) la durée de diffusion restante ($\tau$) avant ladite transition et on transmet les informations de marquage relatives au contenu suivant ladite transition lorsque la durée de diffusion restante ($\tau$) est inférieure à un seuil de temps prédéfini (s).

5.  Procédé selon la revendication 4, dans lequel le seuil de temps (s) est calculé à l'aide de la formule suivante:

$$s = n.T$$

dans laquelle

    -   T représente la période temporelle séparant les envois successifs des données d'exploitation relatives à un même contenu et
    -   n représente un entier naturel dont la valeur est telle que, compte tenu du taux de non-réception des données diffusées, au moins 99% des terminaux récepteurs reçoivent au moins une fois les données d'exploitation du contenu $(C_{n+1})$ avant la fin de la diffusion du contenu $(C_n)$.

6. Procédé selon l'une des revendications 1 à 3, dans lequel on transmet régulièrement les informations de marquage relatives au contenu $(C_{n+1})$ suivant ladite transition durant toute la diffusion du contenu $(C_n)$ précédant ladite transition.

7. Procédé selon l'une des revendications 1 à 6, dans lequel on transmet (41) les informations de marquage relatives à un contenu $(C_n)$ pendant la diffusion dudit contenu $(C_n)$.

8. Procédé selon l'une des revendications 1 à 7, dans lequel, pour marquer une unité de données, on y insère un indicateur de marquage (40b).

9. Procédé selon la revendication 8, dans lequel on insère l'indicateur de marquage dans un en-tête d'une couche de protocole.

10. Procédé selon la revendication 9, dans lequel on insère l'indicateur de marquage dans l'en-tête de l'une des couches du groupe comprenant la couche SL, "Synchronisation Layer", et la couche "Flexmux".

11. Procédé selon l'une des revendications 8 à 10, dans lequel on attribue aux contenus successifs $(C_n, C_{n+1},...)$ des indicateurs de marquage séquentiels.

12. Ensemble de deux signaux diffusés comprenant

    - un premier signal comprenant une succession de contenus décomposés en unités de données, les unités de données appartenant à des contenus successifs contenant des marquages respectifs différents,
    - un second signal comprenant des informations de marquage permettant à un terminal récepteur de distinguer les unités de données appartenant à des contenus successifs $(C_n, C_{n+1})$, à l'aide de leur marquage, et de repérer ainsi chaque transition entre deux contenus successifs,

    les deux signaux étant coordonnés de telle sorte que les informations de marquage relatives à un contenu $(C_{n+1})$ soient diffusées pendant la diffusion de l'un au moins des contenus précédents $(C_n)$.

13. Ensemble de signaux selon la revendication 12, dans lequel les unités de données du premier signal comprennent un indicateur de marquage inséré dans un en-tête d'une couche de protocole.

14. Source de diffusion comprenant

    - des premiers moyens d'émission (14) agencés pour diffuser un premier signal comprenant une succession de contenus décomposés en unités de données, les unités de données appartenant à des contenus successifs contenant des marquages respectifs différents, et
    - des seconds moyens d'émission (15) agencés pour diffuser un second signal comprenant des informations de marquage permettant à un terminal récepteur de distinguer les unités de données appartenant à des contenus successifs $(C_n, C_{n+1})$, à l'aide de leur marquage, et de repérer ainsi chaque transition entre deux contenus successifs,

    les premiers et les seconds moyens d'émission (14, 15) étant agencés pour diffuser le premier et le second signal de façon coordonnée de telle sorte que les informations de marquage relatives à un contenu $(C_{n+1})$ soient diffusées pendant la diffusion de l'un au moins des contenus précédents $(C_n)$.

15. Source selon la revendication 14, dans laquelle il est prévu

    - des premiers moyens d'émission (14) pour émettre les contenus $(C_n)$ successifs véhiculés par le premier signal et décomposés en unités de données, et
    - des moyens (120, 121) pour marquer les unités de données à diffuser en modifiant le marquage des contenus successifs $(C_n, C_{n+1},...)$ séparés par une seule transition.

16. Source selon l'une des revendications 14 et 15, dans lequel il est prévu des seconds moyens d'émission (15) pour émettre des données d'exploitation relatives à chaque contenu $(C_n)$ et des informations de marquage relatives audit contenu $(C_n)$.

17. Terminal récepteur comprenant

    - des premiers moyens (231) de réception d'un premier signal comprenant une succession de contenus décomposés en unités de données, les unités de données appartenant à des contenus successifs contenant des marquages respectifs différents,
    - des seconds moyens (232) de réception d'un second signal comprenant des informations de marquage relatives aux contenus successivement reçus,
    - des moyens mémoires (234) agencés pour, pendant la réception d'un contenu donné $(C_n)$ par les premiers moyens de réception, mémoriser les informations de marquage reçues par les seconds moyens de réception et relatives à un contenu suivant $(C_{n+1})$,

le terminal étant agencé pour détecter la transition entre ledit contenu et ledit contenu suivant à l'aide des informations de marquage préalablement mémorisées.

**Claims**

1. A method of broadcasting a succession of contents ($C_n$, $C_{n+1}$) segmented into data units through a computer network from a broadcasting source S to a plurality of receiver terminals (T) able to receive from the source (S), the method comprising the steps of:

   · marking (40b) the data units to be broadcast by modifying the marking of the data units of different successive contents separated by a single transition;
   · for each content ($C_n$, $C_{n+1}$), sending (40) data units conveying said content ($C_n$, $C_{n+1}$) from the source (S) through the computer network; and
   · supplying to the receiver terminals (T) marking information enabling them to distinguish between data units belonging to successive contents ($C_n$, $C_{n+1}$) with the aid of their marking, and thus to identify each transition between two successive contents($C_n$, $C_{n+1}$);

   the method being **characterized by** the fact that the marking information relating to a content ($C_{n+1}$) is sent (41) during the broadcasting of a preceding content ($C_n$).

2. A method according to claim 1, wherein the data units of a content are broadcast (40) on a broadcasting channel (CD) and the marking information relating to said content is broadcast (41) on a signaling channel (CS) separate from the broadcasting channel (CD).

3. A method according to claim 1 or claim 2, wherein the marking information relating a given content $C_n$ is inserted (41 a) into enabling data (DE) relating to said content ($C_n$).

4. A method according to any one of claims 1 to 3, wherein the remaining broadcasting time ($\tau$) before said transition is evaluated (44) and the marking information relating to the content following said transmission is transmitted when the remaining broadcasting time ($\tau$) is below a predefined time threshold (s).

5. A method according to claim 4, wherein the time threshold (s) is calculated using the following formula:

$$s = n.T$$

in which:

   - T represents the time period between successive sendings of enabling data relating to the same content, and
   - $\underline{n}$ represents a natural integer whose value is such that, given the rate of non-reception of the broadcast data, at least 99% of the receiver terminals receive the enabling data of the content $C_{n+1}$ at least once before the end of broadcasting of the content $C_n$.

6. A method according to any one of claims 1 to 3, wherein the marking information relating to the content ($C_{n+1}$) after said transition is sent regularly throughout the broadcasting of the content ($C_n$) preceding said transition.

7. A method according to any one of claims 1 to 6, wherein the marking information relating to a content ($C_n$) is sent (41) during the broadcasting of said content ($C_n$).

8. A method according to any one of claims 1 to 7, wherein a data unit is marked by inserting (40b) a marking indicator therein.

9. A method according to claim 8, wherein the marking indicator is inserted into a header of a protocol layer.

10. A method according to claim 9, wherein the marking indicator is inserted into the header of one of the layers of the group comprising the synchronization layer (SL) and the Flexmux layer.

11. A method according to any one of claims 8 to 10, wherein sequential marking indicators are assigned to the successive contents ($C_n$, $C_{n+1}$, etc.).

12. A set of two broadcast signals comprising:

   · a first signal comprising a succession of contents segmented into data units, the data units belonging to successive contents containing respective different markings; and
   · a second signal comprising marking information enabling a receiver terminal to distinguish between data units belonging to successive contents ($C_n$, $C_{n+1}$) with the aid of their marking, and thus to identify each transition between two successive contents;

   both signals being co-ordinated so that the marking information relating to a content ($C_{n+1}$) is broadcast

(41) during the broadcasting of a preceding content (C_n).

13. A set of signals according to claim 12, wherein the data units of the first signal include a marking indicator that is inserted into a header of a protocol layer.

14. A broadcasting source comprising:

· first sending means (14) arranged to broadcast a first signal comprising a succession of contents segmented into data units, the data units belonging to successive contents containing respective different markings; and
· second sending means (15) arranged to broadcast a second signal comprising marking information enabling a receiver terminal to distinguish between data units belonging to successive contents ($C_n$, $C_{n+1}$) with the aid of their marking, and thus to identify each transition between two successive contents;

the first and second sending means (14, 15) being arranged to broadcast the first and second signals in co-ordinated manner so that the marking information relating to a content ($C_{n+1}$) is broadcast (41) during the broadcasting of a preceding content ($C_n$).

15. A source according to claim 14, comprising:

· first sending means (14) for sending the successive contents ($C_n$) conveyed by the first signal and segmented into data units; and
· means (120, 121) for marking the data units to be broadcast by modifying the marking of the successive contents ($C_n$, $C_{n+1}$, etc.) separated by a single transition.

16. A source according to either claim 14 or claim 15, comprising second sending means for sending enabling data relating to each content ($C_n$) and marking information relating to said content ($C_n$).

17. A receiver terminal comprising:

· first receiving means (231) for receiving a first signal comprising a succession of contents segmented into data units, the data units belonging to successive contents containing respective different markings;
· second receiving means (232) for receiving a second signal comprising marking information relating to the contents successively received/ successively received contents; and
· memory means (234) arranged to memorize, during the reception of a given content ($C_n$) by the first receiving means, the marking information received by the second receiving means and relating to a next content ($C_{n+1}$);

the terminal being arranged to detect the transition between said content and said next content with the aid of previously stored marking information.

**Patentansprüche**

1. Verfahren zum Senden einer Folge von Inhalten ($C_n$, $C_{n+1}$), die in Dateneinheiten zerlegt sind, von einer Sendequelle (S) aus über ein Datennetz zu einer Vielzahl von Empfangsterminals (T), die geeignet, von der Quelle (S) zu empfangen, das die Schritte umfasst, die bestehen aus:

- Kennzeichnen (40b) der zu sendenden Dateneinheiten durch Verändern der Kennzeichnung der Dateneinheiten der aufeinanderfolgenden Inhalte, die durch einen einzigen Übergang getrennt sind;
- Aussenden (40) von Dateneinheiten für jeden Inhalt ($C_n$, $C_{n+1}$), die den genannten Inhalt ($C_n$, $C_{n+1}$) von der Quelle (S) aus über das Datennetz weiterleiten und
- Liefern von Kennzeichnungsinformationen an die Empfangsterminals (T), die diesen erlauben, die Dateneinheiten, die zu aufeinanderfolgenden Inhalten ($C_n$, $C_{n+1}$) gehören, mit Hilfe ihrer Kennzeichnung zu unterscheiden, und so jeden Übergang zwischen zwei aufeinanderfolgenden Inhalten ($C_n$, $C_{n+1}$) zu finden,

wobei das Verfahren durch die Tatsache **gekennzeichnet** ist, dass man die Kennzeichnungsinformationen, die sich auf einen Inhalt ($C_{n+1}$) beziehen, während der Sendung von mindestens einem der vorausgehenden Inhalte ($C_n$) überträgt.

2. Verfahren gemäß Anspruch 1, bei dem man die Dateneinheiten eines Inhaltes über mindestens einen Sendekanal (CD) sendet (40) und man die Kennzeichnungsinformationen, die sich auf den genannten Inhalt beziehen, über einen Signalkanal (CS) überträgt (41), der vom Sendekanal (CD) verschieden ist.

3. Verfahren gemäß einem der Ansprüche 1 oder 2, bei dem man die Kennzeichnungsinformationen, die sich auf einen gegebenen Inhalt ($C_n$) beziehen, in Verarbeitungsdaten (DE), die sich auf den genannten Inhalt ($C_n$) beziehen, einfügt.

4. Verfahren gemäß einem der Ansprüche 1 bis 3, in dem man die verbleibende Sendedauer ($\tau$) vor dem genannten Übergang auswertet (44) und man die Kennzeichnungsinformationen überträgt, die sich auf den Inhalt beziehen, der auf den genannten Übergang folgt, wenn die verbleibende Sendedauer ($\tau$) unterhalb einer vorgegebenen Zeitgrenze (s) liegt.

5. Verfahren gemäß Anspruch 4, bei dem die Zeitgrenze (s) mit Hilfe folgender Formel berechnet wird:

$$s = n \cdot T$$

wobei

- T die zeitliche Spanne darstellt, die die aufeinanderfolgenden Versendungen der Verarbeitungsdaten trennt, die sich auf einen gleichen Inhalt beziehen und
- n eine natürliche ganze Zahl darstellt, deren Wert so ist, dass in Anbetracht der Quote des Nicht-Empfangs der gesendeten Daten mindestens 99 Prozent der Empfangsterminals mindestens einmal die Verarbeitungsdaten des Inhaltes ($C_{n+1}$) vor dem Ende der Sendung des Inhaltes ($C_n$) erhalten,.

6. Verfahren gemäß einem der Ansprüche 1 bis 3, in dem man während der gesamten Sendung des Inhaltes ($C_n$), die dem genannten Übergang vorausgeht, regelmäßig die Kennzeichnungsinformationen überträgt, die sich auf den Inhalt ($C_{n+1}$) beziehen, der dem genannten Übergang folgt.

7. Verfahren gemäß einem der Ansprüche 1 bis 6, in dem man die Kennzeichnungsinformationen, die sich auf einen Inhalt ($C_n$) beziehen, während der Sendung des genannten Inhaltes ($C_n$) überträgt (41).

8. Verfahren gemäß einem der Ansprüche 1 bis 7, in dem man, um eine Dateneinheit zu markieren, dort einen Kennzeichnungsindikator einfügt (40b).

9. Verfahren gemäß Anspruch 8, in dem man den Kennzeichnungsindikator in einen Header eines Protokoll-Layers einfügt.

10. Verfahren gemäß Anspruch 9, in dem man den Kennzeichnungsindikator in das Kopfelement eines Layers der Gruppe einfügt, die den Layer SL, d.h. "Synchronisation Layer", und den Layer "Flexmux" umfasst.

11. Verfahren gemäß einem der Ansprüche 8 bis 10, in dem man den aufeinanderfolgenden Inhalten ($C_n$, $C_{n+1}$,...) sequenzielle Kennzeichnungsindikatoren zuweist.

12. Menge zweier gesendeter Signale, umfassend:

- ein erstes Signal, das eine Folge von Inhalten, die in Dateneinheiten zerlegt sind, umfasst, wobei die Dateneinheiten, die zu aufeinander folgenden Inhalten gehören, unterschiedliche jeweilige Kennzeichnungen enthalten,
- ein zweites Signal, das Kennzeichnungsinformationen enthält, die einem Empfangsterminal erlauben, die Dateneinheiten, die zu den aufeinander folgenden Inhalten ($C_n$, $C_{n+1}$) gehören, mit Hilfe ihrer Kennzeichnung zu unterscheiden und so jeden Übergang zwischen zwei aufeinander folgenden Inhalten zu finden,

wobei die beiden Signale dergestalt koordiniert sind, dass die Kennzeichnungsinformationen, die sich auf einen Inhalt ($C_{n+1}$) beziehen, während der Sendung von mindestens einem der vorausgehenden Inhalte ($C_n$) übertragen werden.

13. Menge von Signalen gemäß Anspruch 12, in der die Dateneinheiten des ersten Signals einen Kennzeichnungsindikator umfassen, der in einen Header eines Protokoll-Layers eingefügt ist.

14. Sendequelle, umfassend:

- erste Mittel zum Aussenden (14), angeordnet, um ein erstes Signal zu senden, das eine Folge von Inhalten, die in Dateneinheiten zerlegt sind, umfasst, wobei die Dateneinheiten zu aufeinander folgenden Inhalten gehören, die unterschiedliche jeweilige Kennzeichnungen enthalten, und
- zweite Mittel zum Aussenden (15), angeordnet, um ein zweites Signal zu senden, das Kennzeichnungsinformationen enthält, die einem Empfangsterminal erlauben, die Dateneinheiten, die zu aufeinanderfolgenden Inhalten ($C_n$, $C_{n+1}$) gehören, mit Hilfe ihrer Kennzeichnung zu unterscheiden und so jeden Übergang zwischen zwei aufeinanderfolgenden Inhalten zu finden,

wobei die ersten und die zweiten Mittel zum Aussenden (14,15) in einer koordinierten Weise zum Senden des ersten und des zweiten Signals angeordnet sind, so dass die Kennzeichnungsinformationen, die sich auf einen Inhalt ($C_{n+1}$) beziehen, während der Sendung von mindestens einem der vorausgehenden Inhalte ($C_n$) übertragen werden.

15. Quelle gemäß Anspruch 14, in der vorgesehen sind:

- erste Mittel zum Aussenden (14), um die aufeinander folgenden Inhalte ($C_n$) auszusenden, die durch das erste Signal weitergeleitet werden, und die in Dateneinheiten zerlegt sind, und
- Mittel zum Kennzeichnen (120, 121) der zu sendenden Dateneinheiten durch Verändern der Kennzeichnung der aufeinanderfolgenden Inhalte ($C_n$, $C_{n+1}$,...), die durch einen einzigen Übergang getrennt sind.

16. Quelle gemäß einem der Ansprüche 14 oder 15, in der zweite Sendemittel (15) vorgesehen sind, um Verarbeitungsdaten, die sich auf jeden Inhalt ($C_n$) beziehen, und Kennzeichnungsinformationen, die sich auf den genannten Inhalt ($C_n$) beziehen, auszusenden.

17. Empfangsterminal umfassend:

- erste Mittel (231) zum Empfang eines ersten Signals, umfassend eine Folge von Inhalten, die in Dateneinheiten zerlegt sind, wobei die Dateneinheiten, die zu aufeinander folgenden Inhalten gehören, unterschiedliche jeweilige Kennzeichen enthalten,
- zweite Mittel (232) zum Empfang eines zweiten Signals, umfassend Kennzeichnungsinformationen in Bezug auf die nacheinander erhaltenen Inhalte,
- Speichermittel (234), angeordnet, um während des Empfangs eines gegebenen Inhaltes ($C_n$,) durch die ersten Empfangsmittel die Kennzeichnungsinformationen zu speichern, die durch die zweiten Empfangsmittel erhalten wurden und die sich auf einen folgenden Inhalt ($C_{n+1}$) beziehen,

wobei das Terminal angeordnet ist, um den Übergang zwischen dem genannten Inhalt und dem genannten folgenden Inhalt mit Hilfe der vorher gespeicherten Kennzeichnungsinformationen zu erfassen.

P

S

CS

CD₁ . . . . . . CDₓ . . . . CDₙ

30c

30d

Internet

31a

31b

33c

33b

33c

33b

33c

33b

33c

T

**Figure 1**

S

11

12

122

120

10

13

15

121

14

16

**Figure 2**

**Figure 3**

Sens d'écoulement des données

$p_{IP}V_0 - C_{03}$   $p_{IP}V_p - C_{02}$ ⋯⋯⋯ $p_{IP}V_0 - C_{02}$   $p_{IP}V_q - C_{01}$

$p_{IP}A_0 - C_{03}$   $p_{IP}A_p - C_{02}$ ⋯⋯⋯ $p_{IP}A_0 - C_{02}$   $p_{IP}A_q - C_{01}$

⋯⋯⋯ $DE - C_{03}$   $DE - C_{02}$ ⋯⋯⋯ $DE - C_{02}$   $DE - C_{01}$

⋯⋯⋯ $DE - C_{04}$   $DE - C_{03}$ ⋯⋯⋯ $DE - C_{03}$   $DE - C_{02}$

**Figure 4a**

Sens d'écoulement des données

$p_{IP}V_0 - C_{03}$   $p_{IP}V_p - C_{02}$ ⋯⋯⋯ $p_{IP}V_0 - C_{02}$   $p_{IP}V_q - C_{01}$

$p_{IP}A_0 - C_{03}$   $p_{IP}A_p - C_{02}$ ⋯⋯⋯ $p_{IP}A_0 - C_{02}$   $p_{IP}A_q - C_{01}$

⋯⋯⋯ $DE - C_{03}$   $DE - C_{02}$ ⋯⋯⋯ $DE - C_{02}$   $DE - C_{01}$

$DE - C_{04}$   $DE - C_{03}$   $DE - C_{02}$

**Figure 4b**

| En-tête de protocole de la couche SL | Indicateur de marquage | Paquet de données vidéo |
|---|---|---|

**Figure 5a**

| En-tête de protocole de la couche Flexmux | Indicateur de marquage | Paquet de données d'interface SL/Flexmux |
|---|---|---|

**Figure 5b**

30 — Téléchargement du fichier SDP

31 — Acquisition de CS

32 — Réception des données d'exploitation de contenu $C_n$

33 — Mise en réception du canal CD

34 — Réception du contenu $C_n$ et, en parallèle, des données d'exploitation correspondantes

35 — Décodage du contenu $C_n$

36 — Réception des données d'exploitation du contenu $C_{n+1}$

46 — Transition

$n = n+1$

**Figure 6**

**Figure 7**

**Figure 8**

**Figure 9**

35a — Détection de l'indicateur de marquage dans le paquet IP

35b — Extraction des données d'exploitation associées à l'indicateur en mémoire

35c — Décodage du paquet IP

**Figure 10**

40 — Diffusion du contenu $C_n$

44 — $\tau \leq s$ ?

non

oui

45 — Diffusion des données d'exploitation DE du contenu $C_{n+1}$

$n = n+1$

Transition — 46

**Figure 11**

18

40a — Décomposition du contenu $C_n$ en paquets IP

40b — Insertion de l'indicateur de marquage dans les paquets IP

40c — Emission des paquets IP

**Figure 12**

41 — Diffusion des données d'exploitation DE-$C_n$ par CS

$n = n$

42 — Transition?  non

oui

$n = n+1$

**Figure 13**

41a —— Insertion de l'indicateur de marquage dans DE-C$_n$

41b —— Décomposition des DE-C$_n$ en paquets IP

41c —— Emission des paquets IP

**Figure 14**